# EUROPÄISCHE PATENTSCHRIFT

(11) **EP 0 925 665 B1**
(45) Veröffentlichungstag und Bekanntmachung des Hinweises auf die Patenterteilung: **13.02.2002**
(21) Anmeldenummer: 97909259.0
(22) Anmeldetag: 13.09.1997
(51) Int. Cl.: H04L 9/32, H04L 1/12, B60R 25/04

(54) **VERFAHREN ZUR KRYPTOLOGISCHEN AUTHENTIFIZIERUNG IN EINEM RADIOFREQUENZ-IDENTIFIKATIONS-SYSTEM**
METHOD OF CRYPTOLOGICAL AUTHENTIFICATION IN A SCANNING IDENTIFICATION SYSTEM
PROCEDE D'AUTHENTIFICATION CRYPTOLOGIQUE DANS UN SYSTEME D'IDENTIFICATION A BALAYAGE

(30) Priorität: 13.09.1996 DE 19637319
(43) Veröffentlichungstag der Anmeldung: 30.06.1999
(73) Patentinhaber: ATMEL Germany GmbH, 74072 Heilbronn (DE)
(72) Erfinder: BRUHNKE, Michael, D-80809 München (DE); FRIEDRICH, Ferdinand, D-90562 Heroldsberg (DE)
(74) Vertreter: Kolb, Georg
(86) Internationale Anmeldenummer: EP9705012
(87) Internationale Veröffentlichungsnummer: WO9811689

(56) Entgegenhaltungen:
- EP-A- 0 683 293
- EP-A- 0 723 896
- DE-A- 4 317 380
- US-A- 3 605 091

## Beschreibung

Die Erfindung betrifft Verfahren zur kryptologischen Authentifizierung in einem Radiofrequenz-Identifikations-System.

Bei der Identifikation von Personen, Tieren und Objekten hat sich in den letzten Jahren ein System bewährt, bei dem ein (stationäres bzw. tragbares) Lesegerät, auch Reader oder Basisstation genannt, einen mit dem zu identifizierenden Objekt verbundenen Transponder über ein wechselfeld mit Energie versorgt, woraufhin der Transponder mit dem Aussenden-der in ihm gespeicherten Daten antwortet. Aufgrund des verwendeten Frequenzbereichs spricht man auch von Radiofrequenz-ldentifikations-Systemen, kurz RFID.

Ein RFID-Transponder besteht im allgemeinen aus einer Antennenspule und einem integrierten Schaltkreis, der alle notwendigen elektronischen Schaltungsblöcke, wie z. B. zur Spannungsversorgung, zur Taktgenerierung, zur Ablaufsteuerung und zur Speicherung der für die Identifizierung notwendigen Daten, beinhaltet. Die zur Antennenspule parallelgeschaltete Kapazität ist ebenfalls häufig Bestandteil des integrierten Schaltkreises. Sie kann jedoch auch durch ein diskretes Bauelement gebildet werden.

Das RFID-Lesegerät besteht aus einem Schwingkreis mit einer Sendespule und einer Kapazität, der von einer Treiberstufe mit einem Signal mit einer im allgemeinen festen Frequenz (z. B. 125 kHz) angesteuert wird. Weiterhin enthält das Lesegerät elektronische Schaltungsblöcke, um die durch die Absorptionsmodulation vom Transponder gesendeten Daten zu erkennen und um Daten und Befehle, z. B. durch Modulation des Feldes, an den Transponder zu senden.

Lesegerät und Transponder bilden bei der Daten- bzw. bei der Energieübertragung einen lose gekoppelten Transformator. Deshalb ist die Energieübertragung relativ gering.

Die erzielbare Reichweite für die kontaktlose Übertragung von Energie und Daten wird durch folgende Randbedingungen beeinflußt:
- Sendeenergie (beschränkt durch gesetzliche Bestimmungen)
- Spulenabmessungen
- Störpegel der Umgebung
- Übereinstlmmung der Resonanzfrequenzen
- Modulationshub
- Spannungsverlust über den Gleichrichter
- Verwendete Übertragungsverfahren

Beispielsweise in der Anwendung in Form einer Wegfahrsperre ergeben sich durch die kleine um das Zündschloß herum angeordnete sendespule extrem ungünstige Übertragungsbedingungen. Darum gilt es, das System auf minimale Verluste hin zu optimieren. Entscheidend ist dabei:
- Gleiche Resonanzfrequenz von Basisstation und Transponder
- Zeitlich optimierte Übertragungsprotokolle
- Minimale Verluste bei der Energieübertragung
- Maximaler Modulationshub bei der Datenübertragung zur Basisstation (Read)
- Optimierte Datenübertragung zum Transponder (send)

Aus der EP 0 683 293 A1 ein Verfahren zur Authentifizierung in einem Radiofrequenz Identifikationssystem bekannt, bei dem zur kryptologischen Authentifizierung ein Challenge- und Response-Protokoll verwendet wird

Beim Starten eines Kfz nimmt der Anwender eine Zeitdauer von mehr als 150 ms, vom Drehen des Zündschlüssels bis zum Starten des Motors, als Zeitverzögerung war. Daraus folgt, daß das gesamte Übertragungsprotokoll in diesem sehr kurzen Zeitraum abgelaufen sein muß. Dabei gilt es mehrere Punkte zu beachten. Zum einen sollte eine einmalige Datenübertragung das korrekte Ergebnis liefern, zum anderen sollten zusätzliche Funktionen wie die Authentifizierung mittels eines Algorithmus in einer möglichst kurzen Zeit ablaufen.

Aufgabe der Erfindung ist es, ein Verfahren zur kryptologischen Authentifizierung in einem Radiofrequenz-Identifikations-System anzugeben, das in einer möglichst kurzen zeit abläuft.

Diese Aufgabe wird durch ein Verfahren zur kryptologischen Authentifizierung in einem Radiofrequenz-Identifikations-System mit den Merkmalen des Anspruchs 1 gelöst. Die vorteilhafte Ausgestaltung der Erfindung erfolgt gemäß den Merkmalen der abhängigen Ansprüche.

Das Verfahren zur kryptologischen Authentifizierung in einem Radiofrequenz-ldentifikations-System mit einer Basisstation, die einen mit dem zu identifizierenden Objekt verbundenen Transponder über das Wechselfeld eines Abfragesignals mit Energie versorgt, weist folgende Verfahrensschritte auf.

Für die im wesentlichen gesamte Kommunikation zwischen Basisstation und Transponder erzeugt die Basisstation ein Abfragesignal. Der Transponder antwortet bei Empfang des von der Basisstation gesendeten Abfragesignals mit einer in seinem Speicher abgelegten Identifikationsnummer. Daraufhin verschlüsselt die Basisstation eine von ihr generierte erste Bitfolge anhand einer Schlüsselbitfolge, die der Identifikationsnummer des Transponders zugeordnet ist und sendet die so erhaltene zweite Bitfolge zum Transponder.

Beim Empfang der zweiten Bitfolge generiert der Transponder aus der zweiten Bitfolge eine Kontrollbitfolge und sendet diese nach vollständigen Empfang der zweiten Bitfolge an die Basisstation. Diese Kontrollbitfolge dient zur Überprüfung des richtigen Empfangs der zweiten Bitfolge. Zur kryptologischen Authentifizierung verschlüsselt der Transponder die aus der zweiten Bitfolge rekonstruierte erste Bitfolge. anhand der dem Transponder zugeordneten Schlüsselbitfolge und sendet die so erhaltene dritte Bitfolge zur Basisstation. Noch während der Transponder die zweite Bitfolge zur dritten Bitfolge verschlüsselt überprüft die Basisstation anhand der Kontrollbitfolge ob bei der Übertragung der zweiten Bitfolge ein Fehler aufgetreten ist, unterbricht gegebenenfalls die laufende Verschlüsselung im Transponder. Dadurch kann die laufende Authentifizierung unterbrochen werden, da nicht mit einem richtigen Ergebnis gerechnet werden kann. Es wird Zeit beim Start eines erneuten Durchlaufs des Authentifizierungsverfahren gewonnen.

Im anderen Fall prüft die Basisstation die Gütigkeit der empfangenen dritten Bitfolge.

Eine weitere Verkürzung der Zeitdauer für die Authentifizierung wird dadurch erreicht, daß der Transponder die Länge der dritten Bitfolge vor dem Senden an die Basisstation halbiert.

In einer Ausgestaltung des Verfahrens verschlüsselt die Basisstation zu Beginn des Verfahrens sofort eine von ihr generierte ersten Bitfolge anhand einer ihr und dem Transponder zugeordneten Schlüsselbitfolge und sendet die so erhaltene zweite Bitfolge sofort zum Transponderder anstatt erst den Empfang der Identifikationsnummer des Transponder abzuwarten. Dadurch wird eine weitere Verkürzung der Zeitdauer für die Authentifizierung erzielt.

Kurze Beschreibung der Figuren:
- Figur 1: zeigt ein Ablaufdiagramm des Verfahrens zur kryptologischen Authentifizierung in einem Radiofrequenz-Identifikations-System auf der Transponderseite;
- Figur 2: zeigt den Ablauf des Verfahrens in einer Wegfahrsperre für ein Kraftfahrzeug;
- Figur 3: zeigt verschiedene Signalverläufe bei der Kommunikation zwischen Basisstation und Transponder;
- Figur 4: zeigt ein detailiertes Ablaufdiagramm eines RFID Systems mit Kryptologischer Authentifizierung.

In folgenden wird das Verfahren gemäß der Erfindung unter Zuhilfenahme der Figuren anhand eines Ausführungsbeispiels erläutert. Zur näheren Erläuterung des Prinzips einer kryptologischen Authentifizierung wird auf das von TEMIC speziell für hohe Sicherheitsanforderungen, wie z. B. der Wegfahrsperre entwickelte und optimierte Verfahren TIME (TEMIC Immobilizer Encryption) eingegangen, das sich durch folgende Merkmale auszeichnet:
- Sichere und schnelle Authentifizierung (< 100 ms)
- Anwendungsoptimierter Hochsicherheitsalgorithmus
- Kundenspezifische Generierung von einzigartigen Schlüsseln

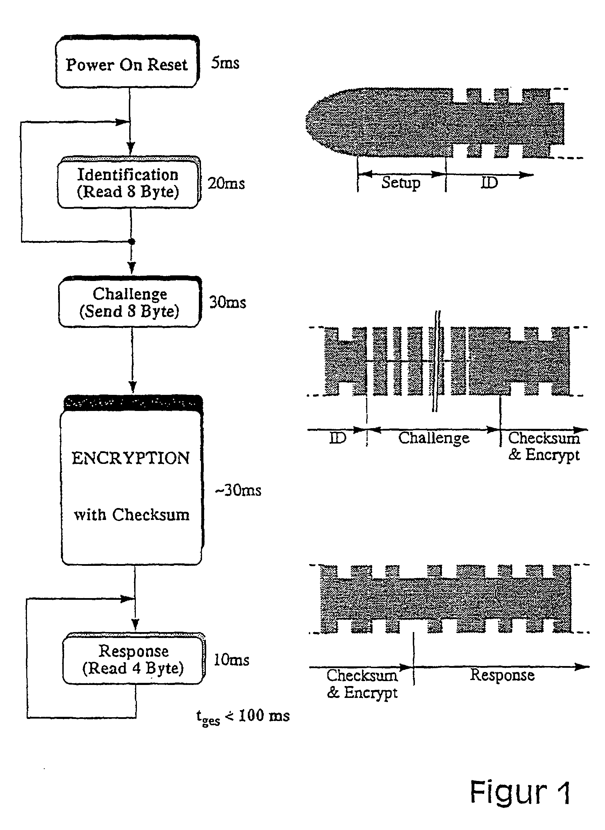

Dadurch wird ein hohes Maß an Sicherheit, sowohl bei der Datenübertragung als auch bei der eigentlichen Verschlüsselung im Zusammenhang mit einer extrem kurzen Authentifizierungszeit erreicht. Figur 1 zeigt den von TEMIC auf minimale Zeitdauer hin optimierten Authentifizierungsablauf. Das besondere ist, erstens die für die Berechnung des Algorithmus benötigte geringe Zeitdauer (Encryption time 30 ms), zweitens die Verkürzung der Response von acht auf vier Byte durch ein besonderes Verfahren und drittens die Möglichkeit den Ablauf beim Erkennen eines Fehlerfalles jederzeit unterbrechen zu können.

Bei der Initialisierung des RFID Systems wird dem Transponder und der Basisstation ein gemeinsamer, die Funktion des Krypto-Algorithmus bestimmender und speziell generierter, 120 Bit langer kryptologischer Schlüssel, der sogenannte crypto Key, übergeben. Dieser Schlüssel ist im Gesamtsystem einzigartig. Kein anderes RFID System, d.h. keine weitere Basisstation und kein weiterer Transponder, besitzt diesen Schlüssel.

Im Betrieb sendet der Transponder nach der Synchronisation (Setup) mit der Basisstation eine eindeutig bestimmte Bitfolge (String) fester Länge (abhängig von der Applikation, z. B. 64 Bit), den sogenannten ID-Code oder kurz ID, an die Basisstation. Diese ID wird in der Regel zur Schlüsselidentifikation verwendet. Dieses ist erforderlich, wenn unterschledliche Transponder (mit unterschiedlichen Krypto-Schlüsseln) mit einer Basisstation zusammenarbeiten sollen.

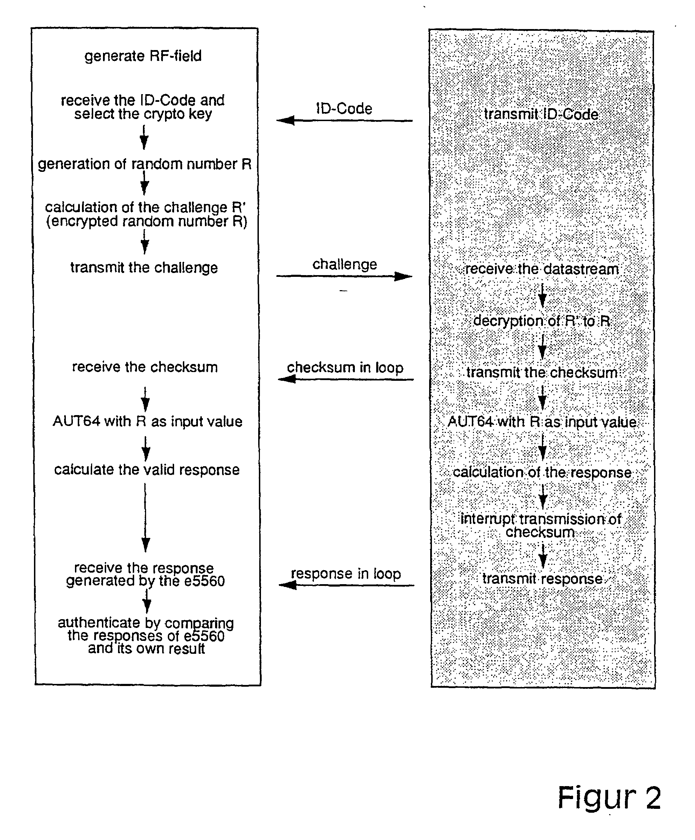

Bei dem verwendeten Authentifizierungsprotokoll handelt es sich um ein Challenge- und Response-Protokoll, wie es in der Figur 2 dargestellt ist, mit dem Merkmal, daß "Known Plaintext"- und "Choosen Plaintext"-Attacken erfolglos sind.

Dle Basisstation generiert eine erste Bitfolge in Form einer 64 Bit-Zufallszahl Z und verschlüsselt diese mittels eines 32 Bit-Teilschlüssels, der aus dem Crypto-Key generiert wird. Die erhaltene zweite Bltfolge in Form eines 64 Bit-Zufallsergebnis - die sogenannte Challenge - wird an den Transponder gesendet. Lediglich ein Transponder, der denselben Teilschlüssel besitzt, ist in der Lage, den Zufallswert zu rekonstruieren. Ein Beobachter des Protokolls ist somit nicht in der Lage die Zufallszahl Z herauszubekommen. Der Transponder und die Basisstation verschlüsseln die Challenge mittels des 120 Bit-Crypto-Keys, unter Verwendung eines speziell entwickelten Algorithmus AUT 64. Aus dem 64 Bit-Verschlüsselungsergebnis wird jeweils eine dritte Bitfolge in Form einer 32 Bit-Zeichenfolge generiert. Der Transponder sendet diese Zeichenfolge - die sogenannte Response - an die Basisstation. Bei Übereinstimmung der gesendeten Response und des generierten Strings akzeptiert die Basisstation die Authentizität des Transponders.

Der verwendete Algorithmus AUT 64 ist eine byte-orientierte Blockchiffre, die aus 64 Bit unter Verwendung eines 120 bit Crypto Keys Output-Strings generiert. Ein 64 Bit-Inputstring (hier die Zufallszahl Z) wird durch Verschlüsselung - in 24 Runden - in einen 64 Bit-outputstring (hier das Verschlüsselungsergebnis) überführt. In jeder Runde wird ein anderer aus dem Crypto-Key generierter Schlüssel verwendet. Durch diese Vorgehensweise wird das hohe Maß an Sicherheit erreicht. Statistische Analysen bestätigen das auf eindrucksvolle Weise. Begründet ist dieses im wesentlichen durch eine nichtlineare Verschlüsselung, die in jeder Runde unterschiedlich (schlüsselgesteuert) gewählt wird.

Key-Erzeugung: Für die Generierung des 120 Bit-Crypto-Keys stellt TEMIC ein Programm zur Verfügung, das unter anderem den Data-Encryption-Standard (DES) als Zufallsgenerator verwendet. Damit wird gewährleistet, daß lediglich der Anwender das Wissen über den Crypto-Key hat.

Der für den AUT 64 benutzte 120 Bit-Crypto-Key besteht aus den Komponenten Family-Key (24 Bit), User-Key (64 Bit) und Random-Key (32 Bit). Der User-Key wird vom Hersteller mittels eines Serial-Keys generiert.

Random-Key: Der Random-Key wird mittels des DES erzeugt. Der zugehörige 56 Bit-DES-Schlüssel sowie den DES-Input bestimmt der Benutzer, so daß TEMIC keine Information über den DES-output und somit über den generierten Random-Key besitzt.

Family-Key: Die jeweiligen Schlüssel werden mittels eines speziellen Programms erzeugt, wobei insbesondere garantiert wird, daß unterschiedliche Benutzer verschiedene Gruppen von Family-Keys der Länge 24 Bit erhalten. Jedem Benutzer werden dabei 12 Bit so zugeordnet, daß er aus einem Bereich von 16 Zahlen wählen kann. Dieses ist das einzige wissen, das TEMIC über die später zum Einsatz kommenden Schlüssel besitzt.

User-Key: Mittels eines speziellen Verfahrens wird dabei eine einmalige 64 Bit-Zufallszahl erzeugt, d. h., daß jeder User-Key nur einmal erzeugt wird. Eine Wiederholung findet erst nach 20,9 * 10¹² erzeugten User-Keys statt.

Verkürzung des Übertragungsprotokolls durch:
- Es muß nicht erst das Senden des gesamten ID-Codes (Identifikation) abgewartet werden, sondern die Challenge könnte bereits nach dem Power-on-Reset gesendet werden → einsparen von 20 ms.
- Während der Berechnung des Algorithmus (Encryption, Verschlüsselung der challenge) wird eine Checksumme zur Basisstation gesendet. Damit wird geprüft, ob die Challenge korrekt übertragen wurde. Sollte diese-nicht korrekt sein, so kann die Encryption sofort durch Senden eines Gap unterbrochen werden und eine neue Challenge gesendet werden. Es muß also nicht erst die zwangsläufig falsche und somit nutzlose Response abgewartet werden.
- Das Ergebnis der Encryption besteht wie der Input (die challenge) aus 8 Byte. Diese 64 Bit werden beispielsweise durch eine XOR-Funktion verknüpft, so daß lediglich 4 Byte als Ergebnis (Response) zur Basisstation zurückübertragen werden brauchen. → Halbierung der Zeit (bei diesem Beispiel von 20 ms auf 10 ms).

Hochsicherheitsalgorithmus:
- Die Zufallszahl, d. h. der Input für den AUT 64-Algorithmus wird nicht direkt übertragen, sondern zunächst verschlüsselt (Ergebnis = die Challenge) → keine choosen plaintext attacks möglich.
- Der Algorithmus AUT 64 wird 24 mal durchlaufen und dabei in jeder Runde variiert, d. h. die nichtlineare Verschlüsselung wird in jeder Runde unterschiedlich (schlüsselgesteuert) gewählt. → Algorithmus schwer "zu brechen".

Key-Erzeugung:
- Ein Teilschlüssel - der User-Key - wird mittels eines speziellen Verfahrens so erzeugt, daß er einmalig ist. Eine Wiederholung findet erst nach 20,9 * 10¹² erzeugten User-Keys statt.
- Nur der Anwender hat Einfluß auf die Generierung des Random-Keys - weder TEMIC noch andere haben darüber Information.
- Beim Family-Key vergibt TEMIC einen Teilbereich an jeden Anwender. Dieser Anwender, z. B. ein Kfz-Hersteller, kann aus einem Bereich von 16 Zahlen wählen und somit jeder Kfz-Serie (z. B. jedem VW Golf) einen bestimmten Family-Key-Teilschlüssel zuordnen. → Jeder Anwender bekommt einen bestimmten Teilschlüsselbereich, womit sich auch der auf die Schlüssel zugreifende Algorithmus unterscheidet (z. B. VW und Opel haben verschiedene Schlüssel).

Die Datenübertragung bei dem hier beschriebenen Verfahren kann in drei Bereiche unterteilt werden:
- Read-Mode = Datenübertragung vom Transponder zu der Basisstation
- Send-Mode = Datenübertragung von der Basisstation zum Transponder
- Write-Mode = Datenübertragung von der Basisstation zum Transponder mit anschließender Programmierung

Um die Datenintegrität, d. h., die manipulationsfreie und somit unveränderte Datenübertragung bei den einzelnen Modes zu gewährleisten, kommen verschiedene Möglichkeiten zur Anwendung. im Read-Mode werden Daten (ID-Code) aus dem EEPROM-Speicher des Transponders ausgelesen und zu der Basisstation gesendet. Die ersten 8 Bit stellen dabei einen kundenspezifischen Header dar, der von TEMIC programmiert und gegen Manipulation gesichert wird. Die anderen Bits sind vom Kunden frei programmierbar und beinhalten normalerweise eine fortlaufende Nummer samt checksumme, so daß eine fehlerhafte Übertragung des Codes erkannt werden kann.

Vorteil: Header und Checksumme werden geprüft.

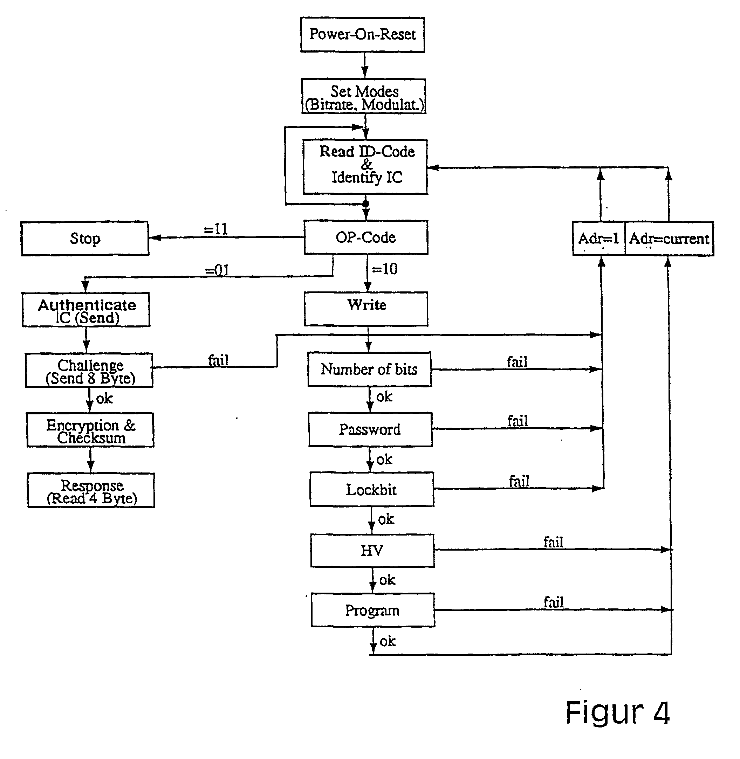

Der Send-Mode wird bei der Übertragung des Startwertes (Challenge) für die Authentifizierung verwendet. Der Transponder überprüft dabei die korrekte Anzahl der übertragenen Bits sowie der Feldtakte zwischen den Feldlücken. Anschließend sendet er eine aus der Anzahl der übertragenen "Einsen" gebildete Checksumme zur Verifikation der korrekten Übertragung an die Basisstation (Figur 4). Sollte die Checksumme nicht korrekt sein, so besteht die Möglichkeit den Authentifizierungsprozeß zu unterbrechen und erneut zu starten.

Vorteil: Bitanzahl und Taktanzahl zwischen den Feldlücken sowie Senden der Checksumme werden geprüft.

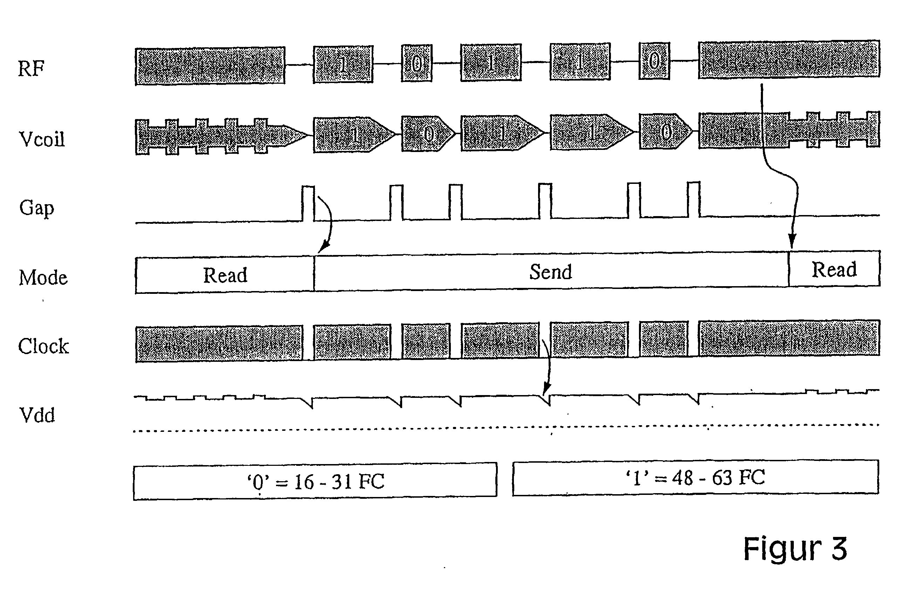

Das TEMIC-Schreibverfahren basiert auf der ON/OFF-Tastung des vom Lesegerätes erzeugten RF-Feldes. Die Information ist in der Anzahl der Feldtakte zwischen zwei Feldlücken enthalten (Figur3). Durch Dekodierung des zwischen zwei Pausen erreichten Zählerstandes werden die gesendeten Bits erkannt. Es ist auch möglich, zusätzlich zu der Dateninformation Steuersignale zu übertragen. Dazu werden weitere Zählerstände definiert. Der Übergang vom Lesebetrieb in den Sendebetrieb wird durch eine Feldlücke eingeleitet, woraufhin die Chipkarte auf "Send-Mode" umschaltet und die nachfolgenden Daten aufnimmt. Die Datenübertragung wird auf Gültigkeit und Anzahl der Datenbits überprüft. Der Send-Mode wird verlassen, wenn nicht nach spätestens 64 Feldtakten eine Pause erkannt wird.

Beim Write-Mode werden die Daten zunächst von der Basisstation zu dem Transponder übertragen und anschließend in das EEPROM programmiert.

Wie im Send-Mode wird auch hierbei die korrekte Übertragung der Datenbits geprüft. Ist der zu beschreibende Speicherbereich gegen Manipulation gesichert, indem das entsprechende Lockbit gesetzt ist, so wird dieses vom IDIC registriert und eine Programmierung verhindert (Figur 4). Sollten alle beschriebenen logischen Überprüfungen positiv ausfallen, so wird die zum Programmieren benötigte hohe Programmierspannung von ca. 16 V intern erzeugt und analog gemessen. Diese Überprüfung findet auch während des gesamten Programmiervorgangs statt, im Fehlerfall bricht der IDIC die Programmierung sofort ab und geht in den Read-Mode, wobei er den ID-Code überträgt. Dieses besondere Verhalten wird von der Basisstation registriert. Bei einem korrekten Ablauf wird der soeben programmierte Block zur Verifikation an die Basisstation zurückübertragen.

Vorteil: Überprüfungen bevor eine Programmierung erfolgt.
- Übertragung der Daten muß korrekt sein, d. h. übertragene Bitanzahl und Takte zwischen den Feldlücken müssen stimmen.
- Password-Schutz darf nicht gesetzt sein.
- Lockbit darf nicht gesetzt sein.
- HV-spannung muß groß genug sein (zum Programmieren der EEPROMS werden etwa 16 V benötigt). Dieses wird vor und wähend des Programmierens geprüft.

Im Fehlerfall geht der IC sofort, d. h., frühzeitiger in den Read-Mode und sendet Daten. Dieses kann von der Basisstation erkannt werden.

zum Schutz der gespeicherten Daten sind mehrere Mechanismen implementiert:
- Lockfunktion
- Password-Schutz
- UV-Schutz

Verschiedene Speicherbereiche können durch Setzen von Lockbits separat gegen Manipulation geschützt werden. Diese Lockfunktion kann nicht rückgängig gemacht werden.

Wird der Password-Schutz aktiviert, so können bestimmte Daten lediglich nach dem Senden des korrekten Passwords in den Speicher programmiert bzw. aus dem Speicher gelesen werden. Beispielsweise wird ein nur dem jeweiligen Kunden bekanntes Password vor dem Ausliefern der Transponder programmiert, so daß ein nichtautorisierter Benutzer keinen Zugriff auf den Speicher hat.

Sollte ein Angreifer versuchen, den Password-Schutz oder die Lockfunktion durch Löschen des EEPROMs, z. B. durch UV-Bestrahlung, zu umgehen, so tritt der UV-Schutz in Kraft. Dieser verhindert das Reprogrammieren eines einmal vollständig gelöschten Speichers.

## Patentansprüche

1. Verfahren zur kryptologischen Authentifizierung in einem Radiofrequenz-Identifikations-system mit einer Basisstation, die einen mit dem zu identifizierenden Objekt verbundenen Transponder über das Wechselfeld eines Abfragesignals mit Energie versorgt, mit folgenden Verfahrensschritten:
• die Basisstation erzeugt ein Abfragesignal;
• der Transponder antwortet bei Empfang des von der Basisstation gesendeten Abfragesignals mit einer in seinem Speicher abgelegten Identifikationsnummer;
• die Basisstation verschlüsselt eine von ihr generierte ersten Bitfolge anhand einer der Identifikationsnummer des Transponders zugeordneten Schlüsselbitfolge und sendet die so erhaltene zweite Bitfolge zum Transponder;
• der Transponder rekonstruiert aus der zweiten Bitfolge die erste Bitfolge und verschlüsselt diese anhand der dem Transponders zugeordneten schlüsselbitfolge und sendet die so erhaltene dritte Bitfolge zur Basisstation;
• die Basisstation prüft die Gültigkeit der empfangenen dritten Bitfolge;
**dadurch gekennzeichnet,**
• **daß** beim Empfang der zweiten Bitfolge der Transponder aus der zweiten Bitfolge eine Kontrollbitfolge generiert und diese nach Vollständigen Empfang der zweiten Bitfolge an die Basisstation sendet und
• **daß** noch während der Transponder die zweite Bitfolge zur dritten Bitfolge verschlüsselt, die Basisstation anhand der Kontrollbitfolge überprüft, ob bei der Übertragung der zweiten Bitfolge ein Fehler aufgetreten ist und gegebenenfalls die laufende Verschlüsselung im Transponder unterbricht.

2. Verfahren zur kryptologischen Authentifizierung nach Anspruch 1, **dadurch gekennzeichnet, daß** der Transponder die Länge der dritten Bitfolge vor dem Senden an die Basisstation halbiert.

3. Verfahren zur kryptologischen Authentifizierung nach Anspruch 1 oder 2, **dadurch gekennzeichnet, daß** die Basisstation zu Beginn des Verfahrens sofort eine von ihr generierte erste Bitfolge anhand einer ihr und dem Transponder zugeordneten Schlüsselbitfolge verschlüsselt und die so erhaltene zweite Bitfolge zum Transponderder sendet anstatt den Empfang der Identifikationsnummer des Transponder abzuwarten.

## Claims

1. A method of cryptological authentication in a radio frequency identification system incorporating a base station which supplies energy via the alternating field of an interrogation signal to a transponder that is connected to the object requiring identification, said method involving the following procedural steps:
- the base station produces an interrogation signal;
- upon receipt of the interrogation signal sent by the base station, the transponder replies with an identification number stored in the memory thereof;
- the base station encrypts a first bit sequence, which has been generated thereby, with the aid of a key bit sequence associated with the identification number of the transponder and transmits the thus obtained second bit sequence to the transponder;
- the transponder reconstructs the first bit sequence from the second bit sequence and encrypts it with the aid of the key bit sequence associated with the transponder and then transmits the thus obtained third bit sequence to the base station;
- the base station checks the validity of the received third bit sequence;
**characterised in that**,
- upon receipt of the second bit sequence, the transponder generates a check bit sequence from the second bit sequence and transmits this to the base station after the second bit sequence has been fully received, and
- whilst the transponder is still encrypting the second bit sequence to form the third bit sequence, the base station checks, with the aid of the check bit sequence, as to whether an error has occurred during the transmission of the second bit sequence and interrupts the encryption process taking place in the transponder should this be necessary.

2. A method of cryptological authentication in accordance with Claim 1, **characterised in that** the transponder halves the length of the third bit sequence prior to the transmission thereof to the base station.

3. A method of cryptological authentication in accordance with Claim 1 or 2, **characterised in that**, at the start of the method, the base station immediately encrypts a first bit sequence generated thereby with the aid of a key bit sequence associated therewith and also with the transponder, and then transmits the thus obtained second bit sequence to the transponder instead of awaiting the receipt of the identification number of the transponder.

## Revendications

1. Procédé d'authentification cryptologique dans un système d'identification à fréquences radio comportant un poste de base, qui alimente en énergie un transpondeur, qui est relié à l'objet devant être identifié, par l'intermédiaire du champ alternatif d'un signal d'interrogation, comprenant les étapes de procédé suivantes :
- le poste de base produit un signal d'interrogation;
- le transpondeur répond lors de la réception du signal d'interrogation émis par le poste de base, avec un numéro d'identification mémorisé dans sa mémoire;
- le poste de base code une première suite de bits, qu'il a produite, sur la base d'une suite de bits de code associée au numéro d'identification du transpondeur, et émet la seconde suite de bits, ainsi obtenue, en direction du transpondeur;
- à partir de la seconde suite de bits, le transpondeur reconstitue la première suite de bits et code cette dernière en référence à la suite de bits de code associée au transpondeur, et émet la troisième suite de bits ainsi obtenue en direction du poste de base;
- le poste de base contrôle la validité de la troisième suite de bits reçue;
**caractérisé en ce**
- **que** lors de la réception de la seconde suite de bits, le transpondeur produit une suite de bits de contrôle à partir de la seconde suite de bits et envoie cette suite de contrôle au poste de base après réception complète de la seconde suite de bits, et
- **que** le transpondeur code la deuxième suite de bits pour former la troisième suite de bits, le poste de base vérifie encore sur la base de la suite de bits de contrôle, si lors de la transmission de la seconde suite de bits, une erreur est apparue, et éventuellement interrompt le codage en cours dans le transpondeur.

2. Procédé d'authentification cryptologique selon la revendication 1, **caractérisé en ce que** le transpondeur divise par deux la longueur de la troisième suite de bits avant l'émission vers le poste de base.

3. Procédé d'authentification cryptologique selon la revendication 1 ou 2, **caractérisé en ce qu'**au début du procédé, le poste de base code immédiatement une première suite de bits, qu'il a produite, sur la base d'une suite de bits de code, qui lui est associée et est associée au transpondeur, et envoie la seconde suite de bits ainsi obtenue en direction du transpondeur au lieu d'attendre la réception du numéro d'identification du transpondeur.
